Europäisches Patentamt

European Patent Office

Office européen des brevets

(19)

(11) Numéro de publication: **0 085 584**
**B1**

(12) **FASCICULE DE BREVET EUROPEEN**

(45) Date de publication du fascicule du brevet: **30.04.86**

(21) Numéro de dépôt: **83400002.8**

(22) Date de dépôt: **03.01.83**

(51) Int. Cl.⁴: **B 60 G 11/20**, F 16 F 1/14, B 60 G 21/04

(54) **Suspension pour un train de deux roues, et ensemble de tubes de torsion et antiroulis pour une telle suspension.**

(30) Priorité: **28.01.82 FR 8201344**

(43) Date de publication de la demande:
**10.08.83 Bulletin 83/32**

(45) Mention de la délivrance du brevet:
**30.04.86 Bulletin 86/18**

(84) Etats contractants désignés:
**DE GB IT SE**

(56) Documents cités:
**DE-C- 976 856**
**FR-A-1 300 315**
**FR-A-1 587 905**
**FR-A-2 154 297**
**FR-A-2 251 450**
**US-A-2 043 542**

**S.A.E. TRANSACTIONS, 1980, Technical Paper no. 800484; K.R. BERG et al.:"Can composite materials compete in vehicle torsion members?"**

(73) Titulaire: **SOCIETE NATIONALE INDUSTRIELLE AEROSPATIALE**
**37 boulevard de Montmorency**
**F-75016 Paris Cedex 16 (FR)**

(72) Inventeur: **Aubry, Jacques Antoine**
**2, avenue Marie Gasquet Domaine du Lac Bleu**
**F-13480 Cabries (FR)**

(74) Mandataire: **Bonnetat, Christian et al**
**Cabinet PROPI Conseils 23 rue de Léningrad**
**F-75008 Paris (FR)**

Courier Press, Leamington Spa, England.

EP 0 085 584 B1

## Description

La présente invention concerne une suspension pour un train de deux roues d'un véhicule, comportant un système de couplage anti-roulis et comprenant deux bras qui oscillent autour d'un axe transversal audit véhicule et qui portent chacun l'une desdites roues, ainsi qu'un ensemble de tubes concentriques coaxiaux audit axe transversal constitué d'au moins un tube de torsion extérieur et un tube anti-roulis intérieur.

Une suspension de ce type est connue par le document US—A—2 043 542 et est tout particulièrement, quoique non exclusivement, appropriée à être utilisée comme suspension arrière d'un véhicule automobile du type à traction avant.

La présente invention concerne également, à titre de pièce détachée pour une telle suspension, ledit ensemble de tubes concentriques.

L'objet de la présente invention est de réaliser une suspension perfectionnée simple, légère, peu coûteuse et présentant des caractéristiques mécaniques améliorées.

A cette fin, selon l'invention, la suspension du type décrit ci-dessus est caractérisée en ce que ledit tube de torsion et ledit tube anti-roulis sont réalisés en matière composite fibres-matière synthétique et sont solidaires à chacune de leurs extrémités, d'une part, l'un de l'autre, et, d'autre part, de l'un desdits bras et en ce que ledit tube de torsion extérieur est rendu solidaire du châssis dudit véhicule en au moins un point voisin du milieu de sa longueur.

On voit ainsi que chaque moitié du tube extérieur dudit ensemble de tubes agit comme barre de torsion pour le bras auquel elle est reliée, tandis que le tube intérieur dudit ensemble agit comme moyen de couplage anti-roulis entre lesdits bras. Le fait de réaliser lesdits tubes en matière composite fibres-résine synthétique permet d'obtenir pour ceux-ci des caractéristiques mécaniques correspondant aux fonctions qu'ils remplissent et qu'il serait impossible d'obtenir avec des tubes d'acier, à dimensionnement et poids comparables. Grâce à la présente invention, on peut donc réaliser une suspension qui, tout en étant simple, est légère, de sorte qu'elle permet d'obtenir un gain sur le poids total du véhicule, et donc sur sa consommation en carburant.

On remarquera que l'utilisation de matériaux composites, notamment à base de fibres de verre, pour leurs propriétés mécaniques et de légèreté est connue en soi, notamment par la publication S.A.E. Transactions, 1980, Technical Paper No. 80 0484; K. R. BERG et al: "Can composite materials compete in vehicle torsion members ?".

Dans un mode de réalisation avantageux, chaque bras comporte un manchon transversal creux dont la paroi extérieure est tourillonnée par rapport au châssis du véhicule par l'intermédiaire de deux paliers espacés le long dudit axe transversal d'oscillation des bras et qui est traversé par l'une des extrémités dudit ensemble de tubes, chacune des extrémités dudit ensemble de tubes étant rendue solidaire de la paroi interne dudit manchon.

La solidarisation des extrémités de l'ensemble de tubes de la paroi interne du manchon est de préférence obtenue par friction.

A cet effet, une bague radialement expansible est montée, du côté de chaque extrémité dudit ensemble de tubes, entre le tube extérieur de celui-ci et la paroi interne dudit manchon et des moyens sont prévus pour comprimer axialement ladite bague.

De préférence, la suspension selon l'invention comporte des moyens de solidarisation du tube extérieur dudit ensemble de tubes sur le châssis du véhicule permettant de régler l'orientation angulaire dudit ensemble de tubes autour de son propre axe.

La présente invention concerne également un ensemble de tubes concentriques coaxiaux destiné à une suspension pour un train de deux roues d'un véhicule, comportant un système de couplage anti-roulis et comprenant deux bras qui oscillent autour d'un axe transversal du véhicule et qui portent chacun l'une desdites roues, ledit ensemble de tubes comprenant au moins un tube de torsion extérieur et un tube anti-roulis intérieur, et caractérisé en ce que le tube de torsion et le tube anti-roulis sont réalisés en matière composite fibres-résine synthétique et sont solidaires l'un de l'autre à chacune de leurs extrémités.

Les figures du dessin annexé feront bien comprendre comment l'invention peut être réalisée.

La figure 1 est une vue en élévation schématique d'une suspension du type de l'invention.

La figure 2 montre, en vue de dessus, par rapport à la figure 1, la moitié gauche d'une suspension conforme à l'invention, avec coupe partielle, la moitié droite de la suspension étant identique et symétrique de la moitié gauche.

La figure 3 montre à plus grande échelle le montage des bras de suspension sur le châssis du véhicule automobile, conformément à la présente invention.

La figure 4 illustre le processus de correction d'assiette.

Sur ces figures, des références identiques désignent des éléments semblables.

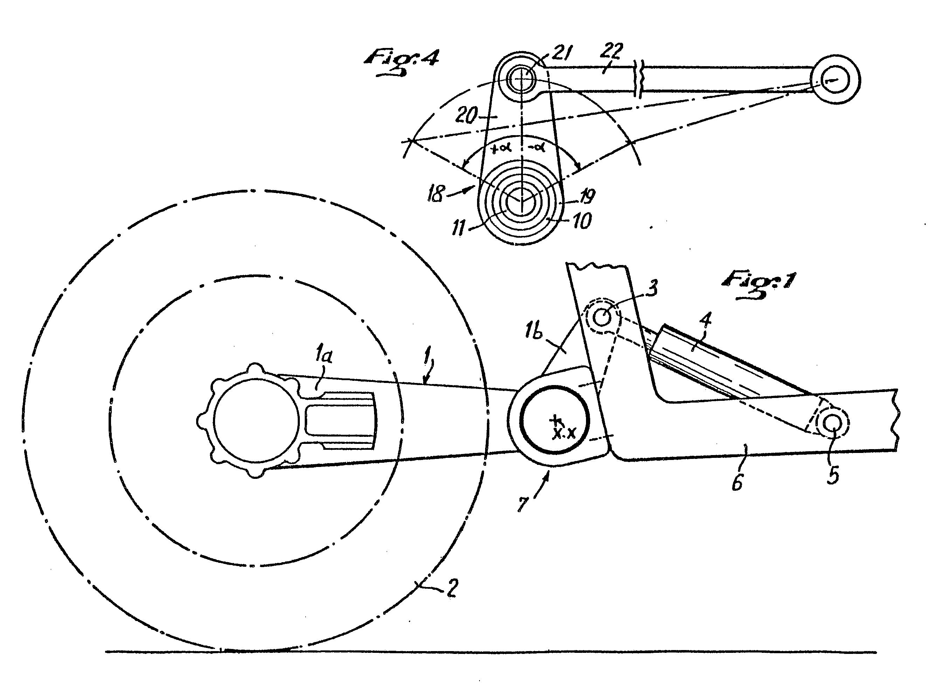

La suspension arrière pour véhicule à traction avant, montrée sur la figure 1, est du type à roue tirée et comporte des bras de suspension coudés 1. Une branche 1a de chaque bras 1 porte une roue 2 à son extrémité, tandis que l'autre branche 1b desdits bras est articulée en 3 à une extrémité d'un amortisseur télescopique hydraulique 4. L'autre extrémité de l'amortisseur 4 est articulée en 5 sur le châssis 6 du véhicule (non représenté). De plus, à l'emplacement du coude reliant la branche 1a à la branche 1b, chaque bras 1 est articulé au châssis 6 par l'intermédiaire d'un agencement 7, permettant audit bras un débattement autour d'un axe X—X transversal au véhicule.

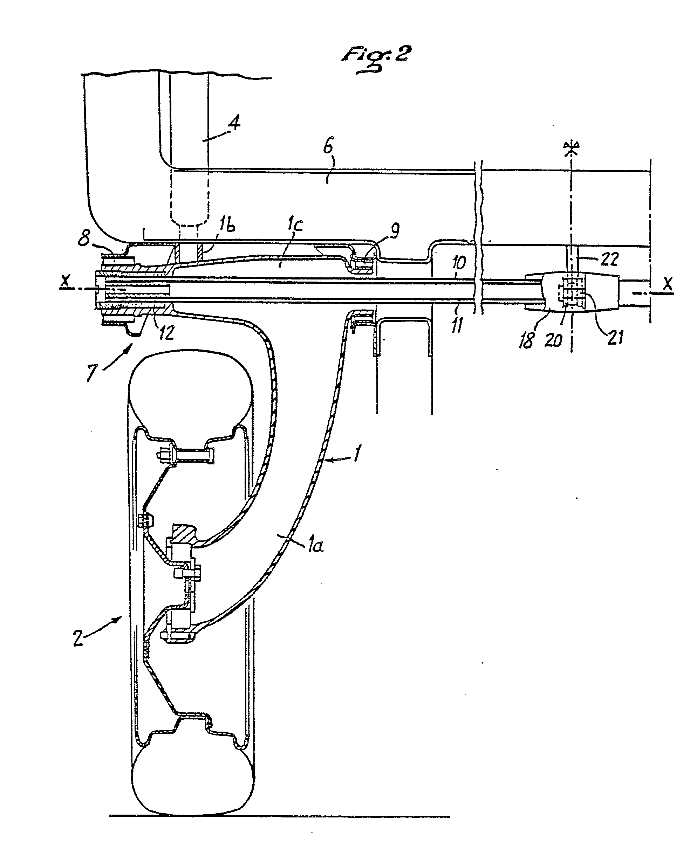

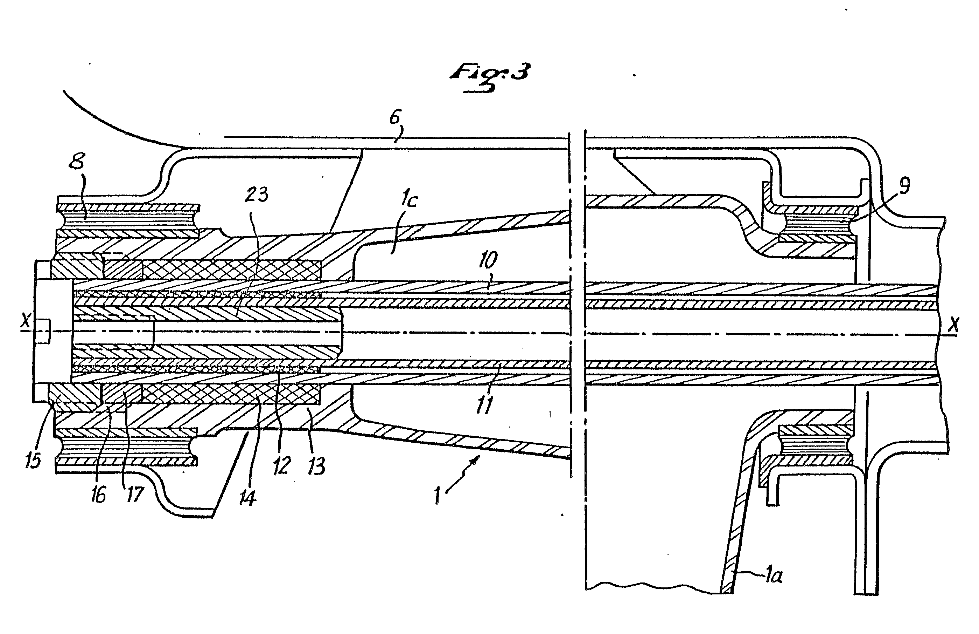

Comme le montrent les figures 2 et 3, les bras 1 sont creux et comportent un manchon allongé 1c d'axe X—X, c'est-à-dire transversal aux branches 1a et 1b.

Aux deux extrémités du manchon 1c sont agencés des paliers 8 et 9, respectivement, reliant lesdits bras 1 au châssis 6. Les paliers 8 et 9, dont l'axe est confondu avec l'axe X—X, sont de préférence du type lamifié et permettent donc la rotation des bras 1 autour dudit axe X—X.

Les deux bras 1 la suspension d'un train de deux roues 2 sont reliés l'un à l'autre par un ensemble de deux tubes 10 et 11, concentriques l'un à l'autre et centrés sur l'axe X—X. Les deux tubes 10 et 11 sont réalisés en une matière composite constituée de fibres (de verre, de carbone, de bore etc. ou d'un mélange de ces matières) enrobées d'une résine synthétique, par la mise en oeuvre de tout procédé connu (bobinage filamentaire, superposition de tresses, tissage, etc.) permettant d'obtenir pour lesdits tubes des valeurs élevées du rapport

$$\frac{R}{E},$$

dans lequel R est la contrainte à la rupture et E le module d'élasticité.

Les tubes 10 et 11 sont rendus solidaires l'un de l'autre à leurs deux extrémités, par exemple par collage avec interposition d'une bague intermédiaire 12.

Les extrémités solidaires des tubes 10 et 11 ainsi renforcées par la bague 12 traversent les manchons 1c des deux bras 1 couplés et sont logées dans un logement 13 desdits manchons prévu du côté du palier extérieur 8 et sont rendues solidaires du bras 1 correspondant par friction. A cet effet, dans chaque logement 13 est prévue une bague 14 élastique, par exemple en un élastomère tel qu'un polyuréthane, entourant l'extrémité extérieure du tube 10, tandis qu'on prévoit un écrou de compression 15, susceptible de se visser dans un filetage 16 de la paroi du logement 13. A l'intérieur du tube 11, est disposée une douille métallique rigide 23, ajustée serrée à l'intérieur du tube et dont la longueur est légèrement supérieure à celle de la bague élastique 14. Ainsi, en vissant l'écrou 15, on peut comprimer la bague 14, éventuellement par l'intermédiaire d'une bague coulissante 17, de sorte que ladite bague 14 se dilate radialement. La pression statique ainsi créée entre la bague 14 et la paroi interne du logement 13, entre la bague 14 et le tube 10, entre le tube 10 et le tube 11 à travers la bague 12 et, enfin, entre le tube 11 et la douille rigide 23 solidarise par frottement l'ensemble des tubes 10 et 11 des deux bras de suspension 1.

De plus, le tube extérieur 10 est ancré en son milieu au châssis 6, par exemple par l'intermédiaire d'un dispositif 18 correcteur d'assiette. Ce dispositif 18 peut comporter une douille 19 collée sur la paroi extérieure du tube 10 et solidaire d'une chape 20 articulée en 21 à une biellette 22.

On voit ainsi que le tube extérieur 10 forme un tube de torsion reliant les deux bras de suspension 1 et fixé de façon variable en son milieu au châssis 6. Par suite de cet ancrage médian, chaque moitié du tube de torsion 10 comprise entre le dispositif 18 et une extrémité agit comme une barre de torsion indépendante de l'autre. Bien entendu, toute torsion d'une desdites moitiés du tube 10 est transmise à l'extrémité correspondante du tube intérieur 11 qui la répercute à son autre extémité. Ce tube intérieur 11 agit donc comme dispositif de couplage anti-roulis des deux bras 1 de la suspension.

On comprend aisément que, par commande de la bielle 22 (grâce à des moyens non représentés), on peut faire tourner la douille 19 autour de l'axe X—X et donc communiquer une rotation autour dudit axe à l'ensemble des tubes 10—11, permettant de régler l'orientation angulaire des bras 1 autour de l'axe X—X et donc l'assiette du véhicule.

## Revendications

1. Suspension pour un train de deux roues (2) d'un véhicule, comportant un système de couplage anti-roulis et comprenant deux bras (1) qui oscillent autour d'un axe transversal (X—X) audit véhicule et qui portent chacun l'une desdites roues (2), ainsi qu'un ensemble de tubes concentriques coaxiaux audit axe transversal (X—X) constitué d'au moins un tube de torsion (10) extérieur et un tube anti-roulis (11) intérieur, caractérisée en ce que ledit tube de torsion (10) et ledit tube anti-roulis (11) sont réalisés en matière composite fibres-matière synthétique et sont solidaires à chacune de leurs extémités, d'une part, l'un de l'autre (en 12), et, d'autre part, de l'un desdits bras (1) et en ce que ledit tube de torsion extérieur (10) est rendu solidaire du châssis (6) dudit véhicule en au moins un point (18) voisin du milieu de sa longueur.

2. Suspension selon la revendication 1, caractérisée en ce que chaque bras (1) comporte un manchon transversal (1c) creux dont la paroi extérieure est tourillonnée par rapport au châssis (6) du véhicule par l'intermédiaire de deux paliers (8 et 9) espacés le long dudit axe transversal (X—X) d'oscillation des bras et qui est traversé par l'une des extrémités dudit ensemble de tubes (10, 11), chacune des extrémités dudit ensemble de tubes étant rendue solidaire de la paroi interne (13) d'un desdits manchons.

3. Suspension selon la revendication 2, caractérisée en ce que la solidarisation des extrémités de l'ensemble de tubes (10, 11) de la paroi interne du manchon (1c) est obtenue par friction.

4. Suspension selon la revendication 3, caractérisée en ce qu'une bague (14) radialement expansible est montée, du côté de chaque extrémité dudit ensemble de tubes (10, 11), entre le tube extérieur (10) de celui-ci et la paroi interne (13) dudit manchon (1c) et en ce que des moyens (15, 16, 17, 23) sont prévus pour comprimer axialement ladite bague (14).

5. Suspension selon l'une quelconque des revendications 1 à 4, caractérisée en ce qu'elle comporte des moyens de solidarisation (18—22) du tube extérieur (10) dudit ensemble de tubes (10, 11) sur le châssis (6) du véhicule permettant de régler l'orientation angulaire dudit ensemble de tubes autour de son propre axe (X—X).

6. Ensemble de tubes concentriques coaxiaux destiné à une suspension pour un train de deux roues (2) d'un véhicule, comportant un système de couplage anti-roulis et comprenant deux bras (1) qui oscillent autour d'un axe transversal (X—X) du véhicule et qui portent chacun l'une desdites roues (2), ledit ensemble de tubes comprenant au moins un tube de torsion (10) extérieur et un tube anti-roulis (11) intérieur, caractérisé en ce que le tube de torsion (10) et le tube anti-roulis (11) sont réalisés en matiére composite fibres-résine synthétique et sont solidaires l'un de l'autre (en 12) à chacune de leurs extrémités.

## Patentansprüche

1. Fahrgestellaufhängung für zwei Räder (2) eines Fahrzeuges, bestehend aus einem Stabilisatorkopplungssystem mit zwei Armen (1), die um eine zum Fahrzeug transversale Achse (X—X) schwenkbar sind und jeweils ein Rad (2) tragen, und aus einer koaxial zur Transversalachse (X—X) liegenden konzentrischen Rohreinheit, die zumindest aus einem äußeren Torsionsrohr (10) und einem inneren Stabilisatorrohr (11) besteht, dadurch gekennzeichnet, daß das Torsionsrohr (10) und das Stabilisatorrohr (11) aus Kunststoffaser-Verbundstoff gefertigt und an ihren jeweiligen Enden

einerseits miteinander (bei 12) und andererseits mit einem der Arme (1) verbunden sind, und daß das äußere Torsionsrohr (10) mit dem Chassis (6) des Fahrzeugs an zumindest einer Stelle (18) in Mittennähe (18) seiner Länge fest verbunden ist.

2. Aufhängung nach Anspruch 1, dadurch gekennzeichnet, daß jeder Arm (1) eine hohle Transversalmuffe (1c) auf, deren Aussenwand gegenüber dem Chassis (6) des Fahrzeugs mittels zweier längs der Transversalen Schwenkachse (X—X) der Arme in Abstand angeordneten Lager gedreht wird und die von einem der Enden der Rohreinheit (10, 11) durchlaufen wird, wobei jedes Ende der Rohreinheit mit der Innenwand (13) einer der Muffen verbunden ist.

3. Aufhängung nach Anspruch 2, dadurch gekennzeichnet, daß die Verbindung der Enden der Rohreinheit (10, 11) der Innenwand mit der Muffe (1c) durch Reibung geschaffen wird.

4. Aufhängung nach Anspruch 3, dadurch gekennzeichnet, daß auf der Seite jedes Endes der Rohreinheit (10, 11) ein radial dehnbarer Ring (14) zwischen deren Aussenrohr (10) und der Innenwand (13) der Muffe (1c) eingesetzt ist und daß Mittel zum axialen Zusammendrücken des Rings (14) vorgesehen sind.

5. Aufhängung nach einem der Ansprüche 1 bis 4, gekennzeichnet durch Befestigungsmittel (18—22) des Aussenrohrs (10) der Rohreinheit (10, 11) am Chassis (6) des Fahrzeugs wodurch die Winkelausrichtung der Rohreinheit um ihre eigene Achse (X—X) geregelt werden kann.

6. Koaxial, konzentrische Rohreinheit für eine Aufhängung eines zweirädrigen Fahrgestells (2) eines Fahrzeugs, bestehend aus einem Stabilisatorkopplungssystem mit zwei Armen (1), die um eine zum Fahrzeug transversale Achse (X—X) schwenkbar sind und die eines der Räder (2) tragen, wobei die Rohreinheit zumindest ein äußeres Torsionsrohr (10) und ein inneres Stabilisatorrohr (11) aufweist, dadurch gekennzeichnet, daß das Torsionsrohr (10) und das Stabilisatorrohr (11) aus Kunststoffaser-Verbundstoff gefertigt und an ihren jeweiligen Enden miteinander (bei 12) verbunden sind.

## Claims

1. Suspension for a set of two wheels (2) of a vehicle with an anti-roll coupling system and comprising two arms (1) oscillating about an axis (X—X) transverse with respect to said vehicle and each bearing one of said wheels (2) and an assembly of concentric tubes coaxial with respect to said transverse axis (X—X) comprising at least one outer torsion tube (10) and one inner anti-roll tube (11), characterized in that said torsion tube (10) and said anti-roll tube (11) are made of a composite fiber synthetic material and are fast at each of their ends, on the one hand, with each other (at 12) and, on the other hand, with one of said arms (1), and in that said outer tube (10) is rendered fast with the chassis (6) of said vehicle at at least one point (18) close to the middle of its length.

2. The suspension of Claim 1, characterized in that each arm (1) comprises a hollow transverse sleeve (1c) of which the outer wall is pivoted with respect to the chassis (6) of the vehicle via two bearings (8 and 9) spaced along said transverse axis (X—X) of oscillation of the arms and which is traversed by one of the ends of said assembly of tubes (10, 11), each of the ends of said assembly of tubes being rendered fast with the inner wall (13) of one of said sleeves.

3. The suspension of Claim 2, characterized in that the ends of the assembly of tubes (10, 11) and the inner wall of the sleeve (1c) are joined by friction.

4. The suspension of Claim 3, characterized in that a radially expansible ring (14) is mounted next to each end of said assembly of tubes (10, 11), between the outer tube (10) of this latter and the inner wall (13) of said sleeve (1c) and in the means (15, 16, 17, 23) for axially compressing said ring (14) are provided.

5. The suspension of one of Claims 1 to 4, characterized in that it comprises means (18, 22) for connecting the outer tube (10) of said assembly of tubes (10, 11) to the chassis (6) of the vehicle, enabling the angular orientation of said assembly of tubes about its own axis (X—X) to be adjusted.

7 **0 085 584** 8

6. Assembly of coaxial concentric tubes for a suspension for a set of two wheels (2) of a vehicle, with an anti-roll coupling system and comprising two arms (1) oscillating about an axis (X—X) transverse with respect to said vehicle and each bearing one of said wheels (2), said tube assembly comprising at least one outer torsion tube (10) and one inner anti-roll tube (11), characterized in that the torsion tube (10) and the anti-roll tube (11) are made of a composite fiber-synthetic material and are fast with each other (at 12) at each of their ends.

Fig. 2

Fig.3